# EUROPEAN PATENT APPLICATION

(11) **EP 2 113 496 A1**
(43) Date of publication of application: **04.11.2009**
(21) Application number: 07707972.1
(22) Date of filing: 02.02.2007
(51) Int. Cl.: C04B 35/52, C22C 26/00

(54) **DIAMOND SINTER**

(71) Applicant: Sumitomo Electric Hardmetal Corp., Itami-shi Hyogo 664-0016 (JP)
(72) Inventor: KURODA, Yoshihiro, Itami-shi Hyogo 664-0016 (JP); KUKINO, Satoru, Itami-shi Hyogo 664-0016 (JP); FUKAYA, Tomohiro, Itami-shi Hyogo 664-0016 (JP)
(74) Representative: Grünecker, Kinkeldey, Stockmair & Schwanhäusser Anwaltssozietät
(86) International application number: PCT/JP2007/051823
(87) International publication number: WO 2008/096400

(57) **Abstract**

A diamond sinter which has higher hardness than conventional diamond sinters and is excellent in strength including chipping resistance and wearing resistance. The diamond sinter comprises diamond particles and a binder and is **characterized in that** the binder comprises: a solid solution comprising carbon, tungsten, and at least one element selected from the group consisting of titanium, zirconium, vanadium, niobium, and chromium; and an iron-group element represented by cobalt. It is further **characterized in that** adjacent diamond particles are bonded to each other.

## Description

### TECHNICAL FIELD

The present invention relates to a diamond sinter, having high hardness, chipping resistance and wear resistance, suitably employed for a cutting edge of a cutting tool represented by a turning tool or an end mill.

### BACKGROUND ART

A diamond sinter prepared by sintering diamond particles with a binder, having high hardness and hardly causing chipping resulting from cleavability which is a defect of single-crystalline diamond, is widely employed as the material for a cutting tool or the like. As a method of manufacturing this diamond sinter, a method of dissolving and redepositing diamond powder with a binder made of a solvent metal having catalytic capability represented by an iron group element such as cobalt, iron or nickel and forming direct bonding referred to as neck growth between diamond particles is disclosed in Patent Document 1 (Japanese Patent Publication No. 39-20483) or the like, for example.

However, the iron group element such as cobalt remaining in the diamond sinter has low strength such as hardness, and may slow down the performance of a cutting edge for such a reason that the element has an action of graphitizing diamond, in addition to that the strength thereof is reduced particularly by a high temperature in use. Therefore, a sinter prepared by bonding diamond particles to each other through a binder made of a carbide or the like of an element belonging to the group 4, 5 or 6 of the periodic table in order to attain higher strength of the sinter is disclosed in Patent Document 2 (Japanese Patent Publication No. 58-32224), Patent Document 3 (Japanese Patent Laying-Open No. 2003-95743) or the like.

Further, a diamond sinter, prepared by bonding diamond particles to each other through a binder made of a carbide of an element belonging to the group 4, 5 or 6 of the periodic table or the like and cobalt, specifying the particle diameters and the content of the diamond particles, the contents of cobalt and the like in the binder, the form of the presence of the carbide and the like in order to obtain a diamond sinter excellent in wear resistance, chipping resistance and shock resistance by suppressing abnormal grain growth in a sintering step and further strengthening direct bonding between the diamond particles is disclosed in Patent Document 4 (Japanese Patent Laying-Open No. 2005-239472).
Patent Document 1: Japanese Patent Publication No. 39-20483
Patent Document 2: Japanese Patent Publication No. 58-32224
Patent Document 3: Japanese Patent Laying-Open No. 2003-95743
Patent Document 4: Japanese Patent Laying-Open No. 2005-239472

### DISCLOSURE OF THE INVENTION

### PROBLEMS TO BE SOLVED BY THE INVENTION

An object of the present invention is to provide a diamond sinter higher in hardness than and superior in strength such as chipping resistance and wear resistance to the said conventional diamond sinters.

### MEANS FOR SOLVING THE PROBLEMS

As a result of deep studies, the inventors have found that a diamond sinter high in hardness and superior in strength such as chipping resistance and wear resistance can be obtained when a binder further contains a solid solution containing tungsten along with a specific element among those belonging to the group 4, 5 or 6 of the periodic table and carbon, and completed the present invention.

The present invention provides a diamond sinter containing diamond particles and a binder, **characterized in that**
the said binder contains a solid solution containing at least one element selected from the group consisting of titanium, zirconium, vanadium, niobium and chromium, carbon and tungsten as well as an iron group element, and
adjacent said diamond particles are bonded to each other.

The content of the diamond particles with respect to the total weight of the diamond particles and the binder is preferably at least 60 weight % and less than 98 weight %. The binder has smaller hardness than diamond, and hence the content of the diamond particles is so set to at least 60 weight % that reduction of the hardness is prevented and strength such as chipping resistance (transverse rupture strength) and shock resistance is superior. If the content of the diamond particles is set to at least 98 weight %, on the other hand, catalytic capability of the binder cannot be sufficiently attained, no neck growth progresses, and the chipping resistance (transverse rupture strength) tends to lower as a result.

The diamond particles contained in the diamond sinter according to the present invention are **characterized in that** the adjacent ones are bonded to each other. The adjacent diamond particles are so bonded to each other that excellent chipping resistance (transverse rupture strength) is attained as a result. Such bonding is attained by forming direct bonding referred to as neck growth between the diamond particles with the binder such as the iron group element having catalytic capability in a step of forming a crystal of diamond by dissolving and redepositing diamond powder serving as a raw material (a step of forming the sinter).

In the present invention, whether or not the adjacent ones of the diamond particles contained in the diamond sinter are bonded to each other can be determined through transverse rupture strength after removing the components other than diamond. In other words, it is assumed that the adjacent ones of the diamond particles are bonded to each other in the present invention if the sinter worked into a rectangle of 6 mm in length, 3 mm in width and 0.4 to 0.45 mm in thickness has transverse rupture strength of at least 1.3 GPa when the sinter is treated in a closed vessel with fluoric acid prepared by mixing 40 ml of a material prepared by double-diluting nitric acid in a concentration of at least 60 % and less than 65 % and 10 ml of hydrofluoric acid in a concentration of at least 45 % and less than 50 % with each other at a temperature of at least 120°C and less than 150°C for 48 hours for removing the components other than diamond and measuring transverse rupture strength by three-point bending strength measurement at a span distance of 4mm.

In the diamond sinter according to the present invention, such a one that the average particle diameter of diamond is not more than 0.8 µm and transverse rupture strength after the said acid treatment exceeds 1.6 GPa is particularly preferable.

The binder constituting the diamond sinter according to the present invention contains the iron group element having catalytic capability depositing a crystal of diamond and forming neck growth between the diamond particles, as well as the solid solution of at least one element (hereinafter referred to as an element Z) selected from the group consisting of titanium, zirconium, vanadium, niobium and chromium, carbon and tungsten.

The said solid solution has higher hardness as compared with the iron group element, and hence the hardness of the binder and the hardness of the diamond sinter are improved when the binder contains the said solid solution. Further, chemical reaction resistance such as heat resistance and oxidation resistance is increased, whereby wear resistance is increased. In addition, affinity to an aluminum alloy material to which a diamond sinter tool is mainly applied is reduced, whereby wear resistance and welding resistance are improved. Further, the strength is improved by solid solubility reinforcement, whereby the chipping resistance (transverse rupture strength) and the shock resistance are increased.

The said solid solution, containing the element Z, tungsten and carbon, preferably contains the element Z as a carbide. The strength such as the chipping resistance and the wear resistance is improved when the solid solution contains the carbide of the element Z. No excellent chipping resistance and wear resistance are attained when the solid solution contains a carbide of an element, such as molybdenum, other than the element Z, even if the element belongs to the group 4, 5 or 6 of the periodic table.

The said solid solution preferably contains tungsten as a carbide, along with the carbide of the element Z. When the solid solution contains both of the carbide of the element Z and the carbide of tungsten, the hardness, the chipping resistance and the wear resistance are further improved, and strength superior to that of a diamond sinter according to prior art containing only one of the carbide of the element Z and the carbide of tungsten is attained.

The element Z, tungsten and carbon contained in the said binder are **characterized in that** the same form the solid solution. The solid solution is so formed that chipping resistance and wear resistance superior to those of the diamond sinter according to prior art are attained. No excellent strength is attained if powder of the carbide of the element Z and powder of the carbide of tungsten are merely mixed with each other without forming the solid solution.

The content of the said solid solution in the binder is preferably at least 0.5 weight % and not more than 50 weight %, more preferably at least 20 weight % and not more than 50 weight %. On the other hand, the content of the iron group element in the binder is preferably at least 50 weight % and not more than 99.5 weight %, more preferably at least 50 weight % and not more than 80 weight %. Excellent chipping resistance and wear resistance are hard to attain if the content of the solid solution is smaller than the said range, while the catalytic capability of prompting neck growth of the diamond particles is hard to sufficiently attain and such a problem that the chipping resistance is reduced is easily caused as a result if the content of the solid solution is larger than the said range.

The said solid solution can further contain oxygen, nitrogen and the like. These elements, particularly nitrogen is generally incorporated into the binder in a step of forming the diamond sinter.

The present invention further provides the following structures, as preferred modes of the said diamond sinter:

The said diamond sinter, **characterized in that** the component ratio of at least one element selected from the group consisting of titanium, zirconium, vanadium, niobium and chromium and tungsten in the said solid solution is in the range of at least 0.4 and not more than 15.0 in atomic ratio. Higher hardness and excellent wear resistance are attained when the component ratio of the element Z and tungsten in the solid solution is in the range of 0.4 ≤ element Z/tungsten ≤ 15.0 in atomic ratio. In this range, the range of 0.4 ≤ element Z/tungsten ≤ 3.0 is particularly preferable, and further higher hardness and excellent wear resistance are attained.

The said diamond sinter, **characterized in that** the said iron group element is cobalt, and the content thereof in the binder is at least 50 weight % and not more than 80 weight %. While iron, nickel and cobalt are listed as iron group elements, cobalt having high catalytic capability is preferable in particular.

When the content of cobalt in the binder is at least 50 weight %, the catalytic capability of prompting neck growth of the diamond particles is particularly remarkable, and excellent chipping resistance etc. can be attained as a result. When the content is not more than 80 weight %, the content of the said solid solution in the binder is increased, and excellent chipping resistance, wear resistance etc. can be attained.

The said diamond sinter, **characterized in that** the average particle diameter of the said diamond particles is not more than 2 µm. The average particle diameter is so reduced to not more than 2 µm that strength reduction of the diamond sinter resulting from cleavage of the diamond particles or the like can be suppressed. A diamond sinter having an average particle diameter in the said range can be obtained by employing the said binder and forming the diamond sinter by controlling the binder to be discontinuous. A method of and conditions for controlling the binder to be discontinuous are disclosed in Patent Document 4.

The said diamond sinter, **characterized in that** the element Z, i.e., at least one element selected from the group consisting of titanium, zirconium, vanadium, niobium and chromium is titanium. The hardness of the sinter is particularly increased and particularly excellent chipping resistance and wear resistance are attained when titanium is employed in the element Z.

A method of manufacturing the diamond sinter according to the present invention is now described.

The said solid solution can be obtained by mixing powder of the carbide of the element Z and powder of the carbide of tungsten with each other separately from diamond powder and thereafter heating and pressurizing the same to 1300°C and at least 3 GPa under which these are solidly dissolved. The obtained solid solution is pulverized with a ball mill or the like.

The diamond sinter can be obtained by dry-mixing powder of the solid solution obtained in this manner, powder of the iron group element and powder of diamond with each other and thereafter heating, pressurizing and sintering the same in a mold of a superhigh pressure generator, for example. The powder of the solid solution is preferably added as particles of not more than 0.8 µm in average particle diameter, to be discontinuous with each other. When controlled to be discontinuous, the diamond particles easily cause neck growth, a strong structure is formed, and the chipping resistance is improved.

The powder of the said iron group element may be metallic powder, or ceramics powder made of a carbide of the element may be employed. However, stronger diamond bonding is generally obtained when the metallic powder is employed.

In place of dry-mixing the powder of the solid solution, the powder of the iron group element and the powder of diamond with each other, the surface of diamond powder may be discontinuously covered with at least one selected from the element Z, a carbide of the element Z, and a solid solution of the carbide of the element Z and tungsten carbide by 20 to 80 % of the surface area of the powder of diamond through PVD (Physical Vapor Deposition) or the like. Also when only the element Z or the carbide of the element Z is applied by PVD and the remaining components are mixed in powder states, a solid solution of the element Z, tungsten and carbon is formed in a sintering step, and a diamond sinter excellent in chipping resistance, wear resistance etc. is obtained. When tungsten carbide is applied by PVD and the remaining components are mixed in powder states, however, no solid solution of the element Z, tungsten and carbon is formed in the sintering step.

The sintering can be performed by holding the said mixture in the mold of the superhigh pressure generator, preferably under a pressure of at least 5.0 GPa and not more than 8.0 GPa and a temperature of at least 1500°C and not more than 1900°C for about 10 minutes. A pressure larger than 8.0 GPa has small practicability in consideration of durability of the mold. When the temperature is rendered higher than 1900°C, this enters a stable area of graphite beyond the equilibrium line of diamond-graphite, and hence diamond is easily graphitized. In consideration of the durability of the mold of the superhigh pressure generator and the performance of the diamond sinter, the mixture is more preferably held under conditions of a pressure of at least 5.7 GPa and not more than 7.7 GPa and a temperature of at least 1500°C and not more than 1900°C for about 10 minutes.

The diamond sinter obtained in the aforementioned manner is further superior in strength such as wear resistance and chipping resistance to conventional diamond sinters, and suitably employed for a cutting edge of a cutting tool or the like.

### EFFECTS OF THE INVENTION

The diamond sinter according to the present invention is a sinter having higher hardness than conventional diamond sinters, and exhibits high transverse rupture strength and a small flank wear width. The high transverse rupture strength indicates that chipping resistance as a tool is excellent while the small flank wear width indicates that wear resistance is excellent, and hence the diamond sinter according to the present invention is a sinter whose strength such as chipping resistance and wear resistance is further superior to those of the conventional diamond sinters, and suitably employed for a cutting edge of a cutting tool or the like.

### BEST MODES FOR CARRYING OUT THE INVENTION

The present invention is now more specifically described with reference to Examples. Examples do not restrict the range of the present invention.

### Example 1

Diamond sinters A to L having binder components shown in Table 1 were manufactured, and transverse rupture strength values of the diamond sinters and widths of wear of flanks of cutters in a case of using the obtained diamond sinters as cutting edges of cutting tools were measured. The sinters C to F and the sinters H to L are inventive samples, while the sinters A, B and G are comparative samples.

### (Manufacturing of Diamond Sinter)

85 parts by weight of diamond powder having an average particle diameter of 1 µm, 10 parts by weight of powder of cobalt and 5 parts by weight of binder components other than cobalt were dry-mixed with each other.

As the binder components other than cobalt, powder of tungsten carbide was employed for manufacturing the sinter A, while that employed for manufacturing the sinter B is a mixture of powder of tungsten carbide and powder of titanium carbide.

When manufacturing the sinters C to L, those prepared by pulverizing solid solutions formed by mixing the elements shown in the column of "Binder Component" in Table 1 in the atomic ratios shown in the column of "Element Ratio in Solid Solution" in Table 1 and holding the same under conditions of a pressure of 5.5 GPa and a temperature of 1400°C for 5 minutes were employed as the binder components other than cobalt.

Raw materials prepared by dry-mixing diamond powder and binders with each other in this manner were charged into vessels of tantalum in states in contact with substrates (discs) made of cemented carbide and held to be sintered under conditions of a pressure of 5.8 GPa and a temperature of 1500°C for 10 minutes with a belt-type superhigh pressure apparatus, to obtain the diamond sinters.

When the particle diameters of diamond particles of the obtained diamond sinters were confirmed through SEM (scanning electron microscope) secondary electron images, the average particle diameters of the diamond particles were 5 µm in the sinter A and 3 µm in the sinter B, while the particles were hypertrophied to an average particle diameter of 2 µm in each of the sinters C to L.

### (Measurement of Content of Cobalt and Carbide·Solid Solution)

Cobalt and carbides·solid solutions contained in the respective ones of the diamond sinters obtained in the above were measured by XRD (X-ray diffraction), with a TEM (transmission electron microscope) and by AES (Auger electron spectroscopy) to detect cobalt and carbides·solid solutions. The respective elements were quantitatively measured by high-frequency inductively coupled plasma spectrometry (ICP), to calculate the respective content (weight % with respect to the total quantities of the diamond particles and the binder components). Table 1 shows the calculated values.

### (Measurement of Hardness of Sinter and Binder)

As to the respective sinters, further, Martens hardness values (ISO14577) of the sinters and binder portions were measured 10 times each, with a nanoindenter under a test load of 10 gf. Table 1 shows the averages.

### (Measurement of Transverse Rupture Strength and Flank Wear Width)

The respective diamond sinters were worked into plate test pieces of 6 mm in length x 3 mm in width x 0.3 mm in thickness, and transverse rupture strength values of the respective test pieces were measured by a three-point bending test at a span distance of 4 mm. Further, sinter tips for cutting (throwaway tips, ISO standard:
TPGN160304) were prepared by mounting the respective diamond sinters on corners of cores having equilateral-triangular major surfaces and a cutting test was conducted under the following conditions, for measuring flank wear widths of the diamond sinters. Table 1 shows the results.

### [Conditions for Cutting Test]

workpiece: Al alloy round bar containing 16 weight % of Si
cutting conditions: peripheral turning, cutting speed: 800 m/min, depth of cut: 0.5 mm, feed rate: 0.12 mm/rev, wet cutting, cutting time: 5 minutes

When transverse rupture strength values of sinters prepared by treating the sinters worked into rectangles of 6 mm in length, 3 mm in width and 0.4 to 0.45 mm in thickness in closed vessels with fluoric acid prepared by mixing 40 ml of a material prepared by double-diluting nitric acid in a concentration of at least 60 % and less than 65 % and 10 ml of hydrofluoric acid in a concentration of at least 45 % and less than 50 % with each other at a temperature of at least 120°C and less than 150°C for 48 hours for removing the components other than diamond were measured by three-point bending strength measurement at a span distance of 4 mm, the transverse rupture strength values of the sinters A to L were: sinter A: 0.5 GPa, sinter B: 0.6 GPa, sinter C: 1.5 GPa, sinter D: 1.4 GPa, sinter E: 1.4 GPa, sinter F: 1.3 GPa, sinter G: 1.3 GPa, sinter H: 1.5 GPa, sinter I: 1.4 GPa, sinter J: 1.3 GPa, sinter K: 1.5 GPa, and sinter L: 1.3 GPa. Therefore, it can be said that adjacent diamond particles are bonded to each other in the sinters C to L.

**[Table 1]**

| Sample No. | Binder Component (weight %) | Element Ratio in Solid Solution (atomic ratio) | Hardness of Sinter Martens Hardness (mgf/µm²) | Hardness of Binder Martens Hardness (mgf/µm²) | Transverse Rupture Strength (GPa) | Flank Wear Width (µm) |
|---|---|---|---|---|---|---|
| A | WC; 4.7 % Co; 11.5 % | - | 9434 | 2504 | 2.33 | 62 |
| B | TiC; 4.9 % WC: 0.4 % Co; 10.8 % | - | 10264 | 3173 | 2.60 | 54 |
| C | (Ti, W)C; 3.2 % Co; 10.7 % | Ti:W:C = 1:1:2 | 12223 | 3959 | 3.08 | 36 |
| D | (Cr, W)C; 3.1 % Co; 10.9 % | Cr:W:C = 1:1:2 | 11985 | 3782 | 2.84 | 41 |
| E | (V, W)C; 3.2 % Co; 10.6 % | V:W:C = 1:1:2 | 11774 | 3628 | 2.77 | 42 |
| F | (Nb, W)C; 3.0 % Co; 10.7 % | Nb:W:C = 1:1:2 | 11417 | 3458 | 2.80 | 44 |
| G | (Mo, W)C; 2.1 % Co; 10.8 % | Mo:W:C = 1:1:2 | 9886 | 2936 | 2.62 | 51 |
| H | (Ti, W)C; 3.1 % Co; 10.9 % | Ti:W:C = 2:1:3 | 12178 | 3762 | 3.06 | 38 |
| I | (Ti, W)C; 3.1 % Co; 10.9 % | Ti:W:C = 9:1:10 | 11033 | 3783 | 2.90 | 38 |
| J | (Ti, W)C; 3.2 % Co; 10.6 % | Ti:W:C = 16:1:17 | 10675 | 3370 | 2.78 | 48 |
| K | (Ti, W)C; 3.4 % Co; 10.7 % | Ti:W:C = 1:2:3 | 11996 | 3605 | 2.99 | 39 |
| L | (Ti, W)C; 3.3 % Co; 10.9 % | Ti:W:C = 1:5:6 | 10874 | 3432 | 2.71 | 47 |

The results of Table 1 show that the transverse rupture strength values of the diamond sinters and the flank wear widths in the case where the same are used as the cutting edges of the cutting tools remarkably vary with the components of the binders.

As obvious from the results of Table 1, the sinters C to F and H to L manufactured by employing the solid solutions of the element Z, tungsten and carbon as the binders are larger in hardness, higher in transverse rupture strength and smaller in flank wear width than the sinters A and B. It is conceivable that the hardness values of the binder components were high in the binders containing the solid solutions, and the hardness values of the overall sinters were increased to improve the wear resistance values as a result. Further, it is conceivable that the solutions also function as binders, and hence the transverse rupture strength values were improved as compared with the sinters A and B containing tungsten carbide etc. attaining no function as a binder.

High transverse rupture strength indicates that chipping resistance as a tool is excellent while a small flank wear width indicates that wear resistance is excellent, and hence it has been clarified that the sinters C to F and H to L which are the inventive samples are suitable as the materials for cutting tools.

The sinter G manufactured by employing the solid solution for the binder was substantially equivalent to the sinter B in all of hardness, transverse rupture strength and wear resistance, although tungsten was solidly dissolved. In other words, it is indicated that no excellent effects of the present invention are attained in the case of molybdenum notwithstanding the element belonging to the group 4, 5 or 6 of the periodic table. This is conceivably because the atomic weights of molybdenum and tungsten were too close to each other to attain remarkable improvement in hardness despite tungsten solidly dissolved in molybdenum carbide.

In the sinters C to F, the ratios element Z:tungsten:carbon in the solid solutions are identical to each other, and only the types of the element Z are different from each other. As shown in the results of Table 1, the sinter C employing titanium as the element Z has particularly large hardness, high transverse rupture strength and a small flank wear width among these, and is particularly excellent as the material for a cutting tool or the like. This is conceivably because titanium has a large function of prompting bonding between diamond particles as compared with other elements, and the sinter C is excellent particularly in transverse rupture strength remarkably influenced by bonding power between diamond particles.

The sinters C and H to L, all containing the solid solutions of titanium, tungsten and carbon in the binders, have different element ratios of titanium and tungsten. All elemental numbers of carbon are the total elemental numbers of titanium and tungsten.

Among the sinters C and H to L, the sinter C in which titanium and tungsten are solidly dissolved in the ratio 1:1 exhibits the most excellent performance, and has large hardness, high transverse rupture strength and a small flank wear width. In the sinter L in which titanium/tungsten is less than 0.4 and the sinter J in which titanium/tungsten exceeds 15, on the other hand, such a tendency is recognized that hardness, chipping resistance and wear resistance are reduced.

### Example 2

Diamond sinters M to R having binder components shown in Table 2 were manufactured while varying methods of adding respective elements, and transverse rupture strength values of the diamond sinters as well as widths of wear of flanks of cutters in a case of using the obtained diamond sinters as cutting edges of cutting tools were measured. The sinters O, P, Q and R are inventive samples, while the sinters M and N are comparative samples.

### (Manufacturing of Diamond Sinter)

More specifically, the diamond sinters were manufactured in the following manner: Diamond powder materials having average particle diameters of 1 µm as well as cobalt powder materials and compounds of compositions shown in Table 2 as binders were mixed in ratios of 85 weight % of the diamond powder materials, 10 weight % of the cobalt powder materials and 5 weight % of additives, and addition was performed by methods shown in Table 2. As to PVD covering, RF (Radio Frequency) sputtering PVD apparatus was employed, for controlling and covering 50 % of the surface areas of the diamond powder materials, to be discontinuous. Raw materials obtained in this manner were charged into vessels of tantalum in states in contact with substrates (discs) made of cemented carbide and held to be sintered under conditions of a pressure of 5.8 GPa and a temperature of 1500°C for 10 minutes with a belt-type superhigh pressure apparatus, to obtain the diamond sinters.

When the particle diameters of the diamond particles of the obtained diamond sinters were confirmed through SEM secondary electron images, the average particle diameters were 0.8 µm.

### (Measurement of Content of Cobalt and Carbide·Solid Solution)

The contents of cobalt and carbides·solid solutions contained in the respective diamond sinters were investigated by a method similar to that in Example 1, and each weight % was calculated and shown in Table 2.

### (Measurement of Transverse Rupture Strength and Flank Wear Width)

Further, Table 2 shows results of measuring transverse rupture strength values and widths of wear of flanks of cutters in a case of using the diamond sinters as cutting edges of tools by methods similar to those in Example 1.

When transverse rupture strength values of sinters prepared by treating the sinters worked into rectangles of 6 mm in length, 3 mm in width and 0.4 to 0.45 mm in thickness in closed vessels with fluoric acid prepared by mixing 40 ml of a material prepared by double-diluting nitric acid in a concentration of at least 60 % and less than 65 % and 10 ml of hydrofluoric acid in a concentration of at least 45 % and less than 50 % with each other at a temperature of at least 120°C and less than 150°C for 48 hours for removing the components other than diamond were measured by three-point bending strength measurement under a condition of a 4 mm span, the transverse rupture strength values were 0.7 GPa and 0.9 GPa in the sinters M and N respectively, while those were 1.7 GPa, 1.6 GPa, 1.7 GPa and 1.9 GPa in O, P, Q and R respectively. Therefore, it can be said that adjacent diamond particles are bonded to each other in the sinters O to R.

**[Table 2]**

| Sample No. | Binder Component (weight %) | Element Ratio in Solid Solution (atomic ratio) | Method of Addition | Transverse Rupture Strength (GPa) | Flank Wear Width (µm) |
|---|---|---|---|---|---|
| M | WC, 2.7 % Co; 11.5 % | - | WC: PVD covering | 2.58 | 62 |
| N | TiC; 2.1 % WC; 1.4 % Co; 10.9% | - | Ti: powder mixing WC: PVD covering | 2.54 | 59 |
| O | (Ti, W)C; 2.9% Co; 10.8 % | Ti:W:C = 1:1:2 | Ti: PVD covering WC: powder mixing | 3.08 | 32 |
| P | (Ti, W)C; 3.1% Co; 10.9 % | Ti:W:C = 1:1:2 | TiC: PVD covering WC: powder mixing | 3.01 | 36 |
| Q | (Ti, W)C; 2.8% Co; 10.5 % | Ti:W:C = 1:1:2 | (Ti, W)C: PVD covering | 3.08 | 33 |
| R | (Zr, W)C; 2.9% Co; 10.8 % | Zr:W:C = 1:1:2 | Zr: PVD covering WC: powder mixing | 2.8 | 45 |

While the sinters N, O, P and Q were prepared by adding titanium and tungsten, the transverse rupture strength values and wear resistance values of the binders and the diamond sinters were different from each other due to the differences between the methods of addition.

Comparing the sinters M and N with each other, no solid solutions of (Ti,W)C were formed but titanium and tungsten were present as titanium carbide and tungsten carbide even if Ti powder was mixed and sintered when the sinters were covered with tungsten carbide by PVD, and hence scarcely any difference was recognized in performance.

In the sinters O to Q covered with titanium, titanium carbide and the solid solutions of (Ti,W)C by PVD, however, the solid solutions of (Ti,W)C were present in the diamond sinters, and remarkable improvement in chipping resistance and wear resistance was recognized. A solid solution of (Ti,W)C is formed when the sinter is covered with a compound containing titanium by PVD, and hence it is obvious from these results that titanium may be in any form of presence before the covering.

Also in the sinter R prepared by replacing titanium in the sinter O with zirconium, a solid solution of (Zr,W)C was formed, and remarkable improvement in chipping resistance and wear resistance was recognized.

## Claims

1. A diamond sinter containing diamond particles and a binder, wherein
said binder contains a solid solution containing at least one element selected from the group consisting of titanium, zirconium, vanadium, niobium and chromium, carbon and tungsten as well as an iron group element, and
adjacent said diamond particles are bonded to each other.

2. The diamond sinter according to claim 1, wherein
the component ratio of at least one element selected from the group consisting of titanium, zirconium, vanadium, niobium and chromium and tungsten in said solid solution is in the range of at least 0.4 and not more than 15.0 in atomic ratio.

3. The diamond sinter according to claim 1 or 2, wherein
said iron group element is cobalt, and the content thereof in the binder is at least 50 weight % and not more than 80 weight %.

4. The diamond sinter according to any of claims 1 to 3, wherein
the average particle diameter of said diamond particles is not more than 2 µm.

5. The diamond sinter according to any of claims 1 to 4, wherein
said at least one element selected from the group consisting of titanium, zirconium, vanadium, niobium and chromium is titanium.
